# EUROPÄISCHE PATENTSCHRIFT

(11) **EP 3 273 352 B1**
(45) Veröffentlichungstag und Bekanntmachung des Hinweises auf die Patenterteilung: **21.09.2022**
(21) Anmeldenummer: 17182060.8
(22) Anmeldetag: 19.07.2017
(51) Int. Cl.: G06F 11/16

(54) **COMPUTERISIERTES SYSTEM**
COMPUTERIZED SYSTEM
SYSTÈME INFORMATISÉ

(30) Priorität: 21.07.2016 CH 9462016
(43) Veröffentlichungstag der Anmeldung: 24.01.2018
(73) Patentinhaber: Supercomputing Systems AG, 8005 Zürich (CH)
(72) Erfinder: Gunzinger, Anton, 8008 Zürich (CH); Dorigatti, Martin, 5504 Othmarsingen (CH); Beyeler, David, 5600 Lenzburg (CH); Stadelmann, Philipp, 8047 Zürich (CH); Huber, Richard, 8006 Zürich (CH)
(74) Vertreter: Frei Patent Attorneys

(56) Entgegenhaltungen:
- EP-A2- 0 507 299
- US-A- 5 640 508
- US-A1- 2004 199 817
- US-A1- 2010 287 421
- CRIBBENS A H: "SOLID-STATE INTERLOCKING (SSI): AN INTEGRATED ELECTRONIC SIGNALLING SYSTEM FOR MAINLINE RAILWAYS", IEE PROCEEDINGS B. ELECTRICAL POWER APPLICATIONS, 1271980 1, Bd. 134, Nr. 3, PART B, 1. Mai 1987 (1987-05-01), Seiten 148-158, XP000719320,

## Beschreibung

Die Erfindung betrifft computerisierte Systeme, insbesondere Steuerungssysteme, bei welchen eine Ausgangsgrösse in Funktion einer Anzahl von Eingangsgrössen ermittelt wird. Die Erfindung betrifft insbesondere ein System, an welches hohe Sicherheitsanforderungen gestellt werden, beispielsweise ein Verkehrssicherungssystem, ein Stellwerk für den Eisenbahnverkehr, die Steuerung einer komplexen Fabrikationsanlage, etc.

US 2010/0287421 zeigt ein redundantes, ereignisgesteuertes System zur Eisenbahnsteuerung, bei welchem zwischen einem Master und einem Slave jeweils nach jedem Ereignis CRC-codierte Daten ausgetauscht werden um die Konsistenz zu prüfen. US 2004/0199817 und US 2010/0287421 zeigen weitere Beispiele für parallel arbeitende Systeme.

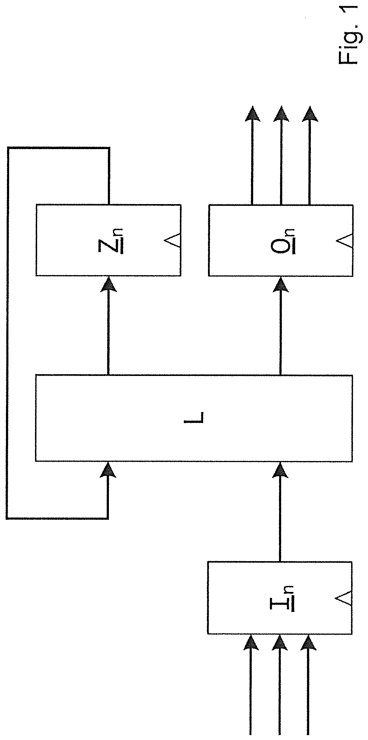

Es ist allgemein bekannt, dass Steuersysteme in der Technik als Zustandsautomaten dargestellt werden können. Je nach Anwendung haben solche Systeme einige wenige Eingangs- und Ausgangssignale und einige wenige Zustandssignale; grosse Systeme können mehrere tausend Eingangs-, Ausgangs- und Zustandssignale haben. **Figur 1** zeigt schematisch einen Zustandsautomaten, wobei Iₙ einen eine diskrete Anzahl von Eingangsgrössen (Eingangssignalen, wobei der Begriff "Signal" hier im breiten Sinn aufzufassen ist und Daten mit umfasst) darstellenden Eingangsvektor, L eine Logik, Zₙ den jeweils aktuellen Zustandsvektor und Oₙ einen eine diskrete Anzahl von Ausgangsgrössen (Ausgangssignalen im breiten Sinn) darstellenden Ausgangsvektor bezeichnet. Die Dimension der Vektoren Iₙ, Zₙ, Oₙ (d.h. die Anzahl von Signalen pro Grössen) ist im Allgemeinen verschieden.

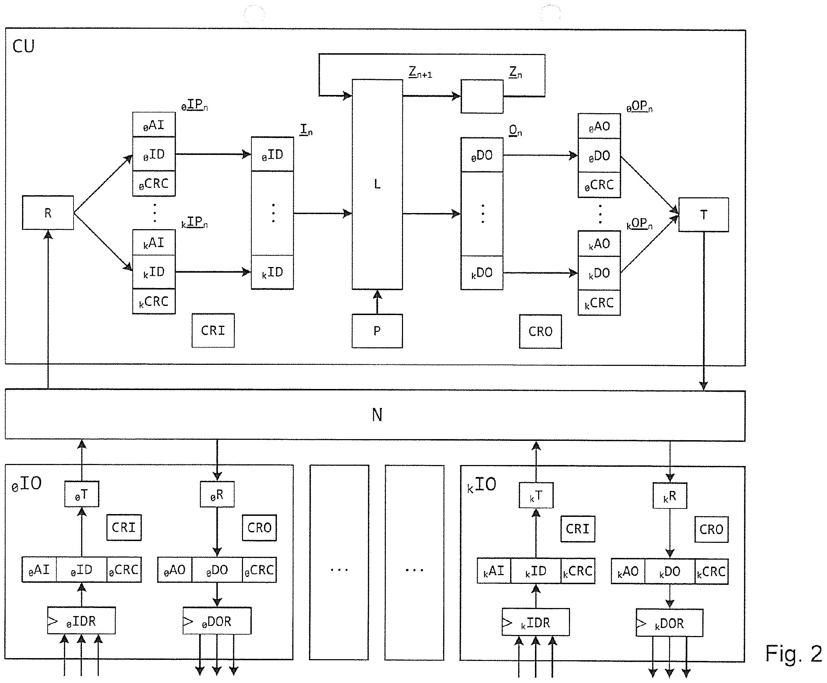

In der Praxis werden nach dem Stand der Technik solche Systeme üblicherweise nach **Figur 2** mit verteilter Ein- und Ausgabe realisiert. Signale aus der Umwelt werden dabei durch die Ein- und Ausgabeeinheiten ₒIO...ₖIO abgetastet und als Resultat abgetastete Daten ₒID...ₖID im Datenregister ₒIDR...ₖIDR zwischengespeichert. Anschliessend senden die Ein- und Ausgabeeinheiten die abgetasteten Daten in Form von Eingangspaketen ₒIPₙ...ₖIPₙ über ein Netzwerk N an eine Zentraleinheit CU. Die Ausgabe der Pakete an das Netzwerk erfolgt dabei über das Netzwerkinterface ₒT...ₖT. Zum Schutz vor Übertragungsfehlern enthalten die Eingangspakete neben den abgetasteten Daten ₒID...ₖID weitere Prüfdaten (Zieladresse ₒAI...ₖAI, Prüfsumme ₒCRC...ₖCRC, und/oder andere).

In der Zentraleinheit CU werden die Eingangspakete durch den Empfänger R übernommen und geprüft. Bei erfolgreicher Prüfung werden die im Paket enthaltenen Daten ₒID...ₖID in den Eingangsvektor In übernommen. Die Logik L bildet dann den Eingangsvektor Iₙ und den Zustandsvektor Zₙ auf den Ausgangsvektor Oₙ und den Zustandsvektor Zₙ₊₁ ab. Der Ausgangsvektor enthält die Ausgangsdaten ₒDO...ₖDO für die Ein-/Ausgabeeinheiten _{0...k}IO. Aus den im Ausgangsvektor vorhandenen Ausgangsdaten werden Ausgangspakete ₒOPₙ...ₖOPₙ für die Ein-/Ausgabeeinheiten gebildet, welche analog zu den Eingangspaketen ebenfalls Prüfdaten enthalten. Die Ausgangspakete werden dann vom Sender T an das Netzwerk übergeben, welches diese an die entsprechende Ein- und Ausgabeeinheit überträgt.

Auf den Ein- und Ausgabeeinheiten werden die Ausgangspakete vom Empfangsbaustein ₀R...ₖR übernommen und geprüft. Bei erfolgreicher Prüfung gelangen die Ausgangsdaten zum Ausgangsregister ₒDOR...ₖDOR und damit zur Ausgabe - beispielsweise eine durch die entsprechende Ausgabeeinheit anzusteuernde Einrichtung.

Im dargestellten Beispiel sind alle mit der Aussenwelt Signale (Daten oder andere Grössen) austauschenden Einheiten als Ein- und Ausgabeeinheiten dargestellt. Es ist aber auch möglich, dass Einheiten vorhanden sind, die nur Eingabeeinheiten oder nur Ausgabeeinheiten bilden. Als Recheneinheit können zur Ausführung der Logik L programmierbare Prozessoren (CPU) eingesetzt werden, die durch ein Programm P gesteuert werden. Es sind aber auch programmierbare Gate Arrays, sogenannte FPGAs denkbar. Hier befinden sich die Logik und die Ablaufsteuerung in einem Konfigurationsspeicher P.

Ein nach solcher Art aufgebautes Computersystem hat bei einer Implementation durch handelsübliche Mikroprozessoren eine Fehlerrate von etwa 1 Fehler/Jahr. In vielen Anwendungen, z.B. Klimasteuerung, Lichtsteuerung, Unterhaltung etc., ist eine solche Fehlerrate tolerierbar. Es gibt aber auch Anwendungen, bei denen ein einzelnes Funktionsversagen zum Tod von hunderten Menschen führen kann, z.B. Steuerungssysteme für die Eisenbahnsicherungstechnik, für Kernkraftwerke oder für Flugzeuge.

Es ist bereits bekannt, dass die Gefährdungsrate eines Computersystems reduziert werden kann, indem mehrere Recheneinheiten parallel dieselbe Rechnung durchführen und die Resultate an den Empfänger übermitteln. Kommen sie nicht zum selben Resultat, so ist offensichtlich ein Fehler aufgetreten. Das System kann darauf mit der Einnahme des sicheren Zustands reagieren. Der sichere Zustand im Fall der Eisenbahnanwendung ist "alle Signale auf Rot", wodurch alle Züge zum Stillstand kommen. Die Anlage ist dann zwar nicht mehr verfügbar, aber es kann auch nicht zu einer Gefährdung kommen. Im Fall von Atomanlagen oder Flugzeugen gibt es im Betrieb in der Regel keinen sicheren Zustand.

Ein Beispiel für ein fehlertolerantes redundantes Computersystem ist beispielsweise in EP 1 443 399 offenbart.

Die Bauteile eines Computersystems können aufgrund zufälliger Ausfälle Funktionsversagen aufweisen. Diese können sich unter Umständen ausschliesslich auf solche Funktionen auswirken, die im Betrieb nur selten beansprucht werden. Man spricht in diesem Fall von schlafenden Fehlern. Die Wahrscheinlichkeit, dass derselbe Fehler zwischen zwei Beanspruchungen der Funktion in allen parallelen Recheneinheiten auftritt, ist bei schlafenden Fehlern deutlich erhöht. Um dem entgegenzuwirken, werden nach dem Stand der Technik solche Funktionen periodisch getestet. Der Aufwand für solche Tests ist erheblich und er kann sogar denjenigen für die Ausführung des funktionalen Codes übertreffen.

Es ist eine Aufgabe der vorliegenden Erfindung, ein computerisiertes System, insbesondere ein Steuerungssystem zu schaffen, welches Nachteile des Standes der Technik überwindet und welches auch für anspruchsvolle Anwendungen geeignet ist, bei denen die tolerierbare Gefährdungsrate üblicherweise kleiner ist als 10⁻⁸ Fehler pro Betriebsstunde, bevorzugt auch bei Implementation durch für Fehlfunktionen noch etwas anfälligere FPGAs, und bevorzugt ohne dass aufwändige Tests zum Aufdecken von schlafenden Fehlern nötig sind.

Diese Aufgabe wird gelöst durch ein System wie es in den Patentansprüchen definiert ist.

Gemäss einem Aspekt der Erfindung wird ein computerisiertes System, insbesondere Steuerungssystem zur Verfügung gestellt, welches eingerichtet ist, welches eingerichtet ist, in getakteten Rechenzyklen, die in einem vorgegebenen Rhythmus durchgeführt werden, aus einem Eingangsvektor (Iₙ), der eine diskrete Anzahl von Eingangsgrössen repräsentiert, und einem Zustandsvektor (Zₙ), der eine diskrete Anzahl von Zustandsgrössen repräsentiert und einen gesamten Systemzustand repräsentiert, einen neuen Zustandsvektor (Zₙ₊₁), dessen Zustandsgrössen aufdatiert sind, sowie einen Ausgangsvektor (Oₙ), der eine diskrete Anzahl von Ausgangsgrössen repräsentiert, zu bestimmen, wobei die Ausgangsgrössen zur Ansteuerung mindestens eines Geräts und/oder zur Ausgabe von Informationen vorgesehen sind. Das System weist eine Mehrzahl von Recheneinheiten auf, welche parallel aus dem Eingangsvektor und dem Zustandsvektor den neuen Zustandsvektor und den Ausgangsvektor bestimmen. Erfindungsgemäss ist das System eingerichtet, dass nach jedem Zyklus mindestens alle neuen Zustandsvektoren zwischen den Recheneinheiten ausgetauscht werden, und das computerisierte System ist weiter eingerichtet, die aufdatierten Zustandsvektoren miteinander vergleichen zu können.

Der Umstand, dass nach jedem Zyklus mindestens die neuen Zustandsvektoren ausgetauscht werden, bedeutet, dass jeder neu von einer Recheneinheit berechnete Zustandsvektor den anderen Recheneinheiten zur Verfügung gestellt wird. Die Rechenzyklen werden getaktet, in einem vorgegebenen Rhythmus durchgeführt.

Bevorzugt werden bei jedem Zyklus nebst den Zustandsvektoren auch die Ausgangsvektoren und/oder Eingangsvektoren ausgetauscht. Ein Austausch der Eingangsvektoren macht deshalb potentiell Sinn, weil nicht sichergestellt ist, dass die Übermittlung der Eingangsvektoren von den Eingabeeinheiten auf dem Weg zu den verschiedenen Recheneinheiten stets identisch verläuft.

Zum Austausch der entsprechenden Vektoren verfügt beispielsweise jede Recheneinheit über einen eigenen Austauschbus OB^{o}...OB^{p}, über den sie das Resultat an die restlichen Recheneinheiten überträgt, d.h. die Recheneinheiten haben jeweils die Möglichkeit, die Daten vom Bus der anderen Recheneinheiten zu lesen (bspw. aber nicht, darauf zu schreiben).

Die empfangenen Zustandsvektoren und ggf. Ausgangsvektoren und/oder Eingangsvektoren können durch jede der Recheneinheiten mit den eigenen Vektoren verglichen werden.

Erfindungsgemäss werden regelmässige, näherungsweise gleich lange Zyklen durchgeführt, wobei jeder Zyklus typischerweise einige wenige Millisekunden beträgt. Das bedeutet, dass jeder Datenfehler (direkt oder durch einen Programmfehler erzeugt) schon nach einigen Millisekunden erkannt und ggf. darauf reagiert wird.

Gemäss einer **ersten Implementation** der vorliegenden Erfindung wird, sobald eine Differenz festgestellt wird, eine Sicherheitsreaktion ausgelöst- bspw. indem die Recheneinheiten keine Datenpakete mehr ausgeben und die Ein-/Ausgabeeinheiten in einen sicheren Zustand versetzt werden, bspw. "alle Signale auf Rot". Zu diesem Zweck kann wie an sich aus dem Stand der Technik bekannt eine einzelne Recheneinheit die Speisespannung für alle Recheneinheiten oder für eines oder mehrerer anderer Einheiten unterbrechen. Ergänzend oder alternativ können auch andere Massnahmen wie "kontrolliertes Herunterfahren aller Komponenten" oder "Alarm" etc. vorgesehen sein. Diese Implementation kann insbesondere dann bevorzugt sein, wenn die Anzahl der Recheneinheiten klein ist, bspw. wenn sie zwei beträgt und/oder wenn eine besonders hohe Sicherheit gefordert wird

Gemäss einer **zweiten Implementation** wird ein vorgegebenes Minimum an übereinstimmenden Resultaten verlangt. Beispielsweise kann das Kriterium sein, dass bei einer Anzahl p von Prozessoren mindestens 1 (l<p) übereinstimmende Resultate für eine korrekte Ausführung verlangt werden, z.B. eine 6-aus-8-Architektur (das bedeutet, dass mindestens 6 der vorhandenen Prozessoren ein identisches Resultat produzieren). Zu diesem Zweck kann wie folgt vorgegangen werden:
- Das Resultat des Vergleichs mit den Resultaten aller anderen Recheneinheiten (bspw. Übereinstimmung j/n; Vergleichsinformation) wird bspw. als Vergleichsresultat (interner Vektor) X mit den übermittelten Daten mitgeführt und allen I/O-Einheiten zugeführt. Diese, und/oder auch die Recheneinheiten selbst, können darum anhand des Vektors X eine Matrix der Vergleichsresultate aller Recheneinheiten erstellen und daraus allenfalls schliessen, dass eine der Recheneinheiten fehlerhafte Resultate produziert. Auch ggf. anhand von Prüfdaten können die I/O-Einheiten entscheiden, ob ein Datenpaket gültig ist. Wenn das Paket nicht gültig ist, können die entsprechenden Ausgabeeinheiten es ignorieren und ggf. optional einen Neustart der betreffenden Recheneinheit auslösen.

- Den Ausgabeeinheiten werden auch die Zustandsvektoren übermittelt, und die Ausgabeeinheiten entscheiden anhand der Zustands- und Ausgabevektoren und ggf. von Prüfdaten, ob die betreffende Recheneinheit zu einer genügend grossen Anzahl von Recheneinheiten gehört, die identische Daten liefert; abhängig davon verwendet die Ausgabeeinheit die Daten oder ignoriert sie.
- Ergänzend oder alternativ (gilt auch als Option für die erste Implementation); wenn eine Recheneinheit feststellt, dass ihr eigener Zustandsvektor (und ggf. Ausgangs- und/oder Eingangsvektor) von einer vorgegebenen Mindest-Anzahl von zueinander identischen Zustandsvektoren (und ggf Ausgangs- und/oder Eingangsvektoren) von anderen Recheneinheiten verschieden ist, schaltet sie sich selbst aus oder initiiert einen Neustart. Analog kann ein solches Ausschalten oder ein solcher Neustart auch von anderen der Recheneinheiten initiiert werden, bspw. von einer Mehrheit oder von einer dedizierten Recheneinheit (Master) oder von einer externen Kontrollinstanz (Überwachungsrechner).

Eine Variante der ersten oder eventuell der zweiten Implementation beruht auf Redundanz, indem ein redundantes System aus mehreren je erfindungsgemäss ausgebildeten computerisierten Teilsystemen aufgebaut ist, wobei die vorstehend genannten Massnahmen nur für dasjenige Teilsystem vorgesehen sind, bei welchem der Fehler festgestellt wird, sodass das andere Teilsystem den Betrieb ungestört weiterführen kann, ohne dass die Ein-/Ausgabeeinheiten in den sicheren Zustand versetzt werden müssten. Diese Variante wird nachstehend noch eingehender beschrieben.

Die verschiedenen Recheneinheiten können zur Vermeidung von hardwarebedingten parallelen Fehlern von verschiedener Bauart sein, insbesondere von verschiedenen Herstellern stammen.

Um diesen Ansatz zu verstehen, wird hier noch kurz das Fehlermodell einer Recheneinheit (CPU, FPGA, etc.) beschrieben. In einer Recheneinheit gibt es drei mögliche Ursachen von Fehlern:
1. Datenfehler: Datenbits, die das Resultat der Rechnung beeinflussen, ändern ihren Wert.
2. Programmcodefehler: Speicherbits, die die Ausführung des Programms bestimmen, ändern ihren Wert. Dadurch wird die Ausführung der Rechnung verändert.
3. Hardware-Fehler: Einzelne Transistoren/Leitungen haben einen Kurzschluss / Unterbruch.

Daten und Programme werden in den Recheneinheiten üblicherweise in flüchtigen Halbleiterspeichern gespeichert. Diese können durch hohe Temperaturen oder durch kosmische Strahlung ihren Wert verändern. Daher sind Daten- und Programmcodefehler der Kategorien 1 und 2 in der Praxis etwa 1000 Mal häufiger als Hardwarefehler der Kategorie 3.

Für die im Folgenden betrachteten Anwendungen kann davon ausgegangen werden, dass Datenvektoren einige 10'000 Bits betragen. Der Programmcode ist 1000 bis 10'000 Mal grösser, deshalb ist hier die Fehlerrate auch 1000 bis 10'000 Mal höher.

Der erfindungsgemässe Ansatz ermöglicht, dass jede der Fehlerarten angegangen wird, wobei optional komplett auf aufwändige Funktionstests verzichtet werden kann.

### Dies namentlich aus folgenden Gründen

Kategorie 1: Indem erfindungsgemäss in jedem Rechenzyklus alle relevanten Daten inklusive der internen Daten der einzelnen Recheneinheiten gegenseitig ausgetauscht und überprüft werden, werden alle Datenfehler augenblicklich erkannt und können sich nicht fortpflanzen. Wie nachstehend noch eingehender erläutert wird, kann der Fehler durch einen Neustart der Recheneinheit aus einem definierten Zustand heraus behoben werden.

Kategorie 2: Ein Programmcodefehler wird irgendwann bewirken, dass ein Rechenresultat falsch ist. Dieses falsche Resultat wird durch das erfindungsgemässe Vorgehen sofort erkannt. Der Programmcodefehler kann durch erneutes Laden des Programmcodes aus einem nichtflüchtigen Speicher und anschliessendem Neustart der Recheneinheit behoben werden. Ein solches erneutes Laden des Programmcodes kann bspw. nach jedem Feststellen eines falschen Resultats vorgesehen sein. Alternativ kann auch vorgesehen sein, dass ein solcher Fehler eine Prüfung des Programmcodes auslöst.

Gemäss einer Gruppe von Ausführungsformen der Erfindung wird, um Programmcodefehler aufzudecken, der Programmcode der einzelnen Recheneinheiten immer wieder geprüft, auch wenn kein falsches Rechenresultat vorliegt. Ein Fehler kann durch erneutes Laden des Programmcodes aus einem nichtflüchtigen Speicher und anschliessendem Neustart der Recheneinheit behoben werden.

Zu diesem Zweck können die Recheneinheiten sich gegenseitig den Programmcode P (im Falle einer CPU) bzw. den Konfigurationscode P (im Falle von FPGA's) übermitteln, bspw. in vorgegebenen Intervallen, ihn überprüfen und bei Abweichung mit dem eigenen Programmcode oder mit einer bspw. nichtflüchtig abgespeicherten Referenz eine oder mehrere der vorstehenden Massnahmen (Sicherheitsreaktion, temporäres aus-dem-System-Nehmen und/oder Neustarten) auslösen.

Kategorie 3: Hardwarefehler. Auch ein Hardwarefehler wird irgendwann bewirken, dass ein Rechenresultat falsch ist, und das wird aufgrund des erfindungsgemässen Vorgehens erkannt. Im Gegensatz zum Programmcodefehler wird der - wie erörtert sehr viel seltenere - Hardwarefehler nicht so einfach zu beheben sein. Zur Beherrschung der Hardwarefehler können aber bei einem erfindungsgemässen Vorgehen so viele Recheneinheiten parallel geschaltet werden, dass das Fehlerziel über die Betriebsdauer des Systems (typischerweise 25 - 50 Jahre) erreicht wird. Recheneinheiten, die aufgrund eines Hardwarefehlers wiederholt falsche Resultate liefern, können gegebenenfalls ganz aus dem System eliminiert werden, aufgrund der erwähnten ausreichenden Redundanz ohne negative Konsequenzen für das Gesamtsystem.

Da ein Datenfehler in einer Recheneinheit oder auch in einer nachgeschalteten Komponente - bspw. des Netzwerks - zu einem falschen Ausgangsvektor Oₙ⁰...Oₙ^{p}, und/oder einem falschen Ausgangspaket _{0..k}OP⁰ₙ..._{0..k}OP^{p}ₙ führen kann, wird gemäss einer Gruppe von Ausführungsformen ferner vorgeschlagen, jedes Ausgangspaket mit einer pro Recheneinheit individuellen Signatur zu versehen. Bei einer solchen Signatur handelt es sich um Prüfdaten, die in an sich bekannter Art (über CRC- oder andere Algorithmen) erzeugt werden können, die aber individuell sind.

Die Signatur der einzelnen Recheneinheiten ist so gestaltet, dass es keiner Recheneinheit möglich ist, die Signatur einer anderen Recheneinheit zu erzeugen, wodurch sichergestellt ist, dass die empfangende Einheit nicht aufgrund einer korrekten Signatur einer anderen Recheneinheit ein Datenpaket fälschlicherweise akzeptiert. Es kann auch vorgesehen sein, dass die eigentlichen Ausgangsdaten im Ausgangsdatenpaket nur einmal vorkommen (anstatt pro Recheneinheit einmal) und dass nur die sich unterscheidenden Signaturen aller Recheneinheiten enthalten sind.

Der Umstand, dass keine Recheneinheit die Signatur einer anderen Recheneinheit erzeugen kann, kann auf verschiedene Arten verwirklicht werden. Beispielsweise können die Recheneinheiten unterschiedliche Algorithmen oder denselben Algorithmus mit einem unterschiedlichen Schlüssel, Startwert, Generatorpolynom, etc. verwenden.

In einer Gruppe von Ausführungsformen sind die Recheneinheiten als konfigurierbare Logikschaltung, insbesondere in der FPGA-Technologie verwirklicht. Beispielsweise kann jede Recheneinheit ein FPGA aufweisen oder durch einen solchen gebildet werden. FPGAs sind zwar an sich in Steuerungs- und anderen Computersystemen längst bekannt für subsidiäre Funktionen; sie sind insbesondere aufgrund des günstigen Verhältnisses zwischen erreichbarer Rechenleistung und Grösse geschätzt. Für die Verwendung in einer zentralen Einheit oder als zentrale Einheit eines komplexen Systems wurden sie jedoch bisher verworfen, insbesondere weil sie im Ruf stehen, fehleranfälliger zu arbeiten als konventionelle Mikroprozessoren, welche Folgen von Befehlen aus einem Programmspeicher abarbeiten. Aufgrund des erfindungsgemässen Vorgehens werden aber solche vermeintlichen Nachteile der konfigurierbaren Logikschaltungen ausgeglichen und mehr als kompensiert, wobei die grossen Vorteile bestehen bleiben und voll genutzt werden können.

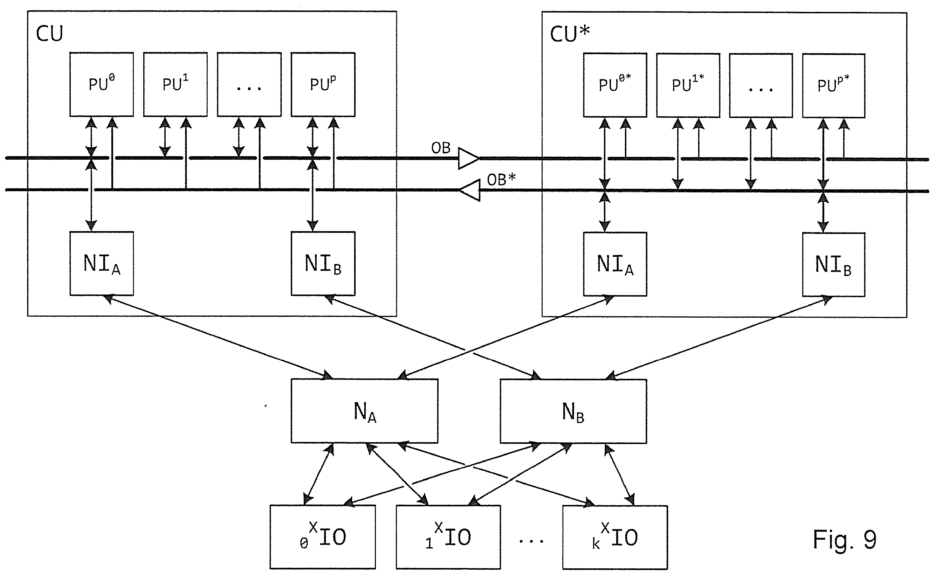

In einer Gruppe von Ausführungsformen (siehe Fig. 9) sind mindestens zwei Systeme der erfindungsgemässen Art zu einem redundanten System zusammengefasst. Dabei ist das redundante System eingerichtet, dass im Normalbetrieb beide computerisierten Systeme unabhängig voneinander arbeiten und je alle notwendigen Rechnungen ausführen.

Die beiden computerisierten Systeme (Zentralsysteme, "Teilsysteme"; vgl. Systeme CU, CU^{∗} in Fig. 9) der genannten Art können ihrem Partner jeweils, insbesondere bei jedem Zyklus, den gesamten Systemzustand mitteilen.

Wenn in einem der computerisierten Systeme die vorstehend diskutierte Sicherheitsreaktion ausgelöst wird und die Resultate nicht verwendet werden können, funktioniert das andere computerisierte System weiter. So kann trotz hoher Systemsicherheit im redundanten System auch eine sehr hohe Verfügbarkeit hergestellt werden. Sobald dasjenige computerisierte System, welches einen Fehler produziert hat, wieder einsatzbereit ist, kann es sich über die in jedem Zyklus ausgetauschten Daten sofort wieder mit dem anderen computerisierten System synchronisieren und den Betrieb wiederaufnehmen.

Optional kann dabei das redundante System so eingerichtet sein, dass jeweils dasjenige (Teil-)system als "Master" arbeitet, welches schon länger fehlerfrei arbeitet.

Ein erfindungsgemässes computerisierte System und insbesondere ein redundantes System der vorstehend beschriebenen Art kann über ein zweites redundantes Netzwerk N_{B} (vgl. Fig. 9) zur Erhöhung der Verfügbarkeit verfügen.

In Ausführungsformen weist das erfindungsgemässe computerisierte System (bzw. das redundante System) ausserdem eine Mehrzahl von Ein- und/oder Ausgabeeinheiten, insbesondere der vorstehend anhand von Fig. 2 diskutierten Art, auf. Diese wechselwirken mit der Umwelt, indem sie bspw. durch Abtasten Daten ermitteln und/oder über ein Interface eine Ausgabe, bspw. von Steuerungssignalen, an Einheiten (bspw. Schalter) vornehmen.

Diese Ein-/Ausgabeeinheiten (bzw. die Ausgabeeinheiten) können insbesondere eingerichtet sein, die Konsistenz der empfangenen Daten zu prüfen. Bspw. können sie eingerichtet sein zu prüfen, ob alle von den verschiedenen Recheneinheiten erstellten Ausgangsdaten identisch sind. Ergänzend oder alternativ können sie eingerichtet sein, zu prüfen, ob alle Prüfsummen von allen Recheneinheiten korrekt sind. Sie können insbesondere eine Ausgabe über das Interface nur dann durchführen, wenn alle Prüfsummen korrekt sind, oder wenn eine vorgegebene Mindest-Anzahl von Prüfsummen korrekt ist.

Die Ein- und/oder Ausgabeeinheiten können ausserdem eingerichtet sein, in einen sicheren Zustand zu gehen, wenn während einer Mindest-Zeitspanne kein Datenpaket vom zentralen Rechner (Zentralsystem, aufweisend die Recheneinheiten) empfangen wurde.

Mindestens eine der Ein- und/oder Ausgabeeinheiten kann ausserdem mehrkanalig eingerichtet sein. Beispielsweise kann sie - wenn sie (auch) als Eingabeeinheit ausgebildet ist - mit mehreren Kanälen unabhängig ein Signal (Strom oder Spannung) abtasten. Die mehren unabhängigen Kanäle können ergänzend oder alternativ je die Zieladresse, die Daten (den Datenvektor, als Teil des Eingangs-Datenvektors) und Prüfsumme berechnen. Die Prüfsummenberechnung der Kanäle kann - analog zu den Recheneinheiten - so erfolgen, dass die Prüfsummen der Kanäle verschieden sind und die Kanäle nicht befähigt sind, die Prüfsumme des jeweils anderen Kanals zu berechnen - bspw. durch verschiedene Initialwerte eines selben Polynoms.

Die von den Eingabeeinheiten erzeugten Datenpakete (und ggf. der mehreren Kanäle) werden bspw. durch das Netzwerk zu einem Kommunikationspaket kIP zusammengefügt und mit Adresse und Prüfsumme ergänzt. Von dort werden sie durch das Netzwerk an das Zentralsystem übertragen. Recheneinheiten des Zentralsystems CU verfügen bspw. über mit den Eingabeeinheiten identische Prüfsummenrechner und können überprüfen, ob ein empfangenes Datenpaket von den Eingabeeinheiten korrekt übertragen wurde. Die Daten des empfangenen Paketes werden bspw. nur dann zur weiteren Verarbeitung mitberücksichtigt, wenn alle Prüfsummen korrekt sind.

Optional kann vorgesehen sein, dass das Zentralsystem die Ausgabeeinheiten ₖIO nicht mit weiteren Paketen versorgt, solange keine gültigen Pakete empfangen wurden. Wenn diese eingerichtet sind, nach einer gewissen Zeit ohne empfangene Pakete in den sicheren Zustand zu gehen, gehen dadurch nach einer gewissen Zeit alle solchen Einheiten in den sicheren Zustand.

Mindestens einige und bspw. alle der Eingabeeinheiten und der Ausgabeeinheiten können als Ein- und Ausgabeeinheiten ausgebildet sein.

Eine mögliche Anwendung ist ein Stellsystem, insbesondere für Eisenbahnanlagen aufweisend ein erfindungsgemässes computerisiertes System sowie zusätzlich den Ein- und/oder Ausgabeeinheiten zugeordnete Stellteilen (Sensoren, Schalter, etc.).

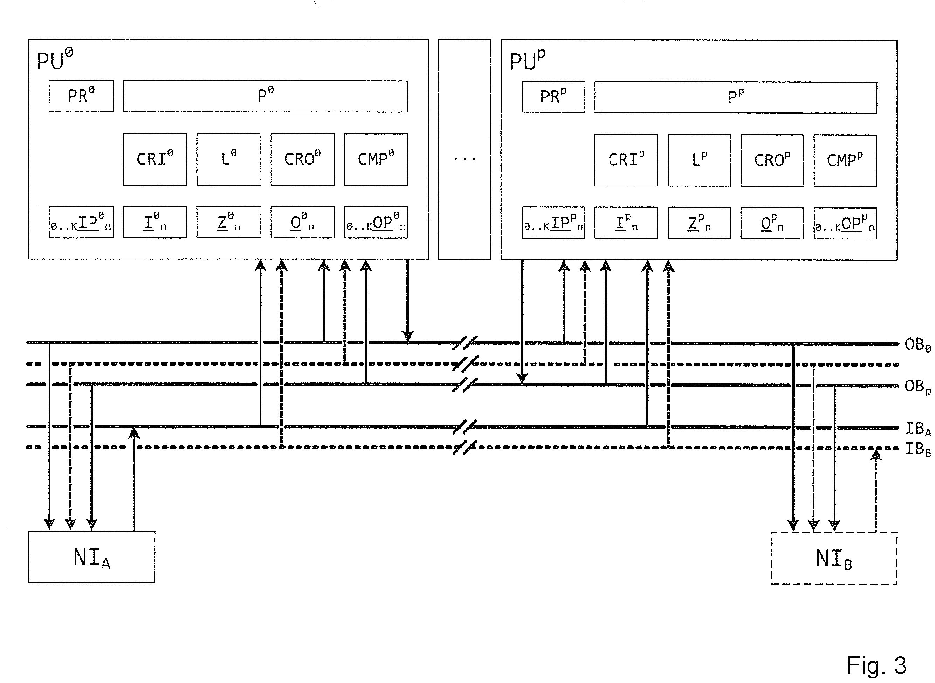

Nachfolgend werden Prinzipien der Erfindung und Prinzipien von speziellen Ausführungsformen der Erfindung anhand von schematischen Zeichnungen eingehender beschrieben. In den Zeichnungen bezeichnen gleiche Kennzeichnungen gleiche oder analoge Elemente. Bei der Beschreibung der Erfindung anhand von Fig. 3-9 wird auch auf die Figuren 1 und 2 und die dort eingeführten Notationen Bezug genommen. Es zeigen:
- Figur 1 das Prinzip eines Zustandsautomaten;
- Figur 2 ein System gemäss dem Stand der Technik;
- Figur 3 ein Zentralsystem eines erfindungsgemässen Systems mit Netzwerk;
- Figur 4 ein Schema einer möglichen Sicherheitsreaktion;
- Figur 5 das Erzeugen eines Gesamt-Datenpakets zur Ausgabe an eine Ein-/Ausgabeeinheit k;
- Figur 6 eine Alternative für das Erzeugen eines Gesamt-Datenpakets zur Ausgabe an eine Ein-/Ausgabeeinheit k;
- Figur 7 eine Ein-/Ausgabeeinheit mit Netzwerk;
- Figur 8 das Erzeugen eines Gesamt-Datenpakets von der Ein-/Ausgabeeinheit k an das Zentralsystem; und
- Figur 9 ein redundantes System.

In **Figur 3** ist ein erfindungsgemässes System schematisch dargestellt. Die Zentraleinheit verfügt über mehrere parallele Recheneinheiten PU°... PU^{p}. Jede dieser Recheneinheiten empfängt die Eingangspakete IPₙ^{o}...ₖIPₙ^{p} von den Netzwerkinterfaces NI und hat den bisherigen Zustandsvektor Zₙ₋₁^{o}...Zₙ₋₁^{p} gespeichert. Daraus berechnen die Recheneinheiten unabhängig voneinander den Eingangsvektor Iₙ^{o}...Iₙ^{p}, den Zustandsvektor Zₙ^{o}...Zₙ^{p} und den Ausgangsvektor Oₙ^{o}...Oₙ^{p}.

In Fig. 3 bezeichnet PR (die diskutierten Grössen sind jeweils mit einem Index 0... p versehen, der für die Programmeinheit steht) den Programm-Referenzspeicher, P den Programmspeicher, L die Logikeinheit, CRI und CRO die Prüfsummenrechner für eingehende bzw. ausgehende Daten, CMP die Vergleichslogik, welche die errechneten Vektoren mit den entsprechenden empfangenen Vektoren der anderen Recheneinheiten vergleicht.

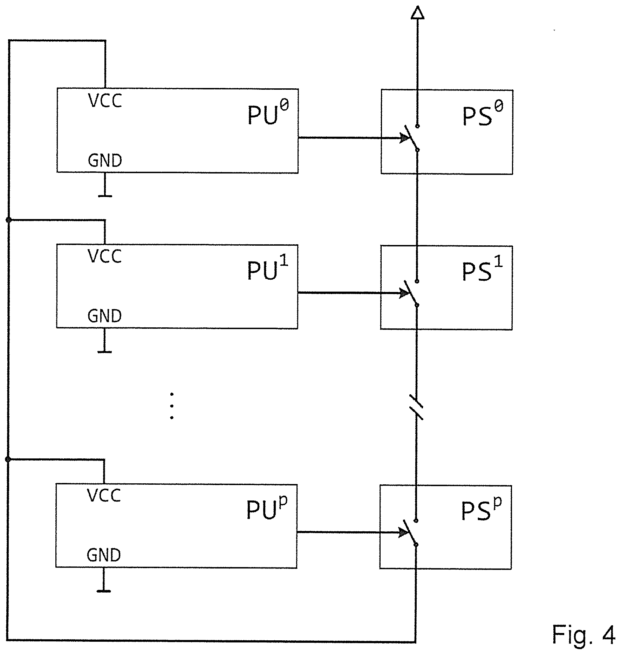

Erfindungsgemäss tauschen die Recheneinheiten nach jeder Berechnung eines neuen Zustandsvektors das Resultat untereinander aus. Dazu verfügt beispielsweise jede Recheneinheit über einen eigenen Bus OB^{o}... OB^{p}, über den sie das Resultat an die restlichen Recheneinheiten überträgt. Die Recheneinheiten vergleichen dann mit der Vergleichslogik CMP°... CMP^{p} die Resultate der einzelnen Kanäle miteinander. Stellen sie eine Abweichung fest, so leiten sie bei einer Ausführung gemäss der ersten Implementation eine Sicherheitsreaktion ein. Ein Beispiel dafür ist in **Figur 4** schematisch dargestellt. Dies geschieht hier, indem die Speisespannung durch ein einzelnes Rechenelement über einen Schalter PS⁰... PS^{P} für alle Rechenelemente unterbrochen wird. Es ist sicherzustellen, dass die Schalter zum Unterbrechen der Speisespannung jederzeit dazu in der Lage sind (wofür auf Verfahren nach dem Stand der Technik zurückgegriffen werde kann).

Ergänzend oder alternativ kann vorgesehen sein, dass die betreffende Recheneinheit neu gestartet wird und sich nach dem Neustart mit Zustandsdaten, die von den anderen Recheneinheiten stammen, wieder in den Prozess einklinkt.

Durch die vorliegende Erfindung ist gewährleistet, dass sich ein Datenfehler im Zustandsvektor nicht von einem Berechnungszyklus zum nächsten fortpflanzen kann. Die Ausfalloffenbarungszeit eines solchen Fehlers ist also auf die Zeit eines Berechnungszyklus begrenzt.

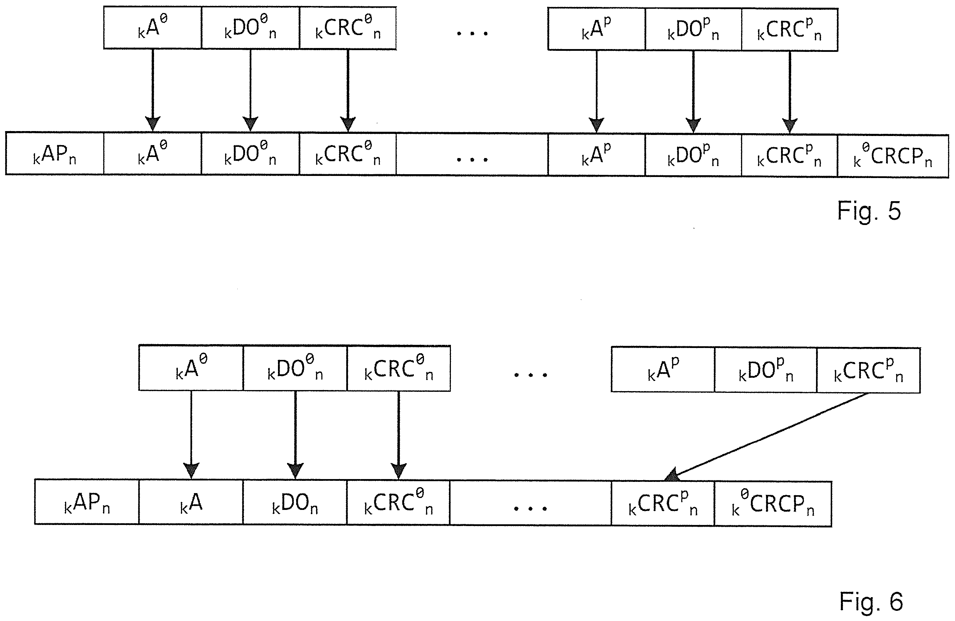

Ein Datenfehler in einer Recheneinheit kann ausserdem zu einem falschen Ausgangsvektor Oₙ⁰...Oₙ^{p}, bzw. einem falschen Ausgangspaket _{0..k}OP⁰ₙ..._{0..k}OP^{p}ₙ führen. Um solche Datenfehler zu erkennen, erstellt in einer Gruppe von Ausführungsformen jede Recheneinheit PU^{o}...PU^{p} mit jedem Ausgangspaket eine individuelle Signatur _{0..k}CRC⁰ₙ..._{0..k}CRC^{p}ₙ. Die Signatur der einzelnen Recheneinheiten ist so gestaltet, dass es keiner Recheneinheit möglich ist, die Signatur einer anderen Recheneinheit zu erzeugen. Dies kann beispielsweise dadurch erreicht werden, dass die Recheneinheiten unterschiedliche Algorithmen oder denselben Algorithmus mit einem unterschiedlichen Schlüssel, Startwert, Generatorpolynom, etc. verwenden. Die Ausgangspakete mitsamt den Signaturen übergeben die Recheneinheiten an die Netzwerkinterfaces NI. Diese setzen die Ausgangspakete der einzelnen Recheneinheiten zu einer Nachricht zusammen, was in **Figur 5** gezeigt ist.

In Ausführungsformen gemäss der ersten Implementation, gemäss welcher abweichende Daten nicht toleriert werden, kann die Grösse der Nachrichten optional reduziert werden, indem die Nutzdaten der Ausgangspakete nur einmal in der Nachricht enthalten sind. Zu diesem Zweck kann bspw. ein Protokollumwandler des Netzwerksinterfaces, welcher am Eingang zum Netzwerk die Datenpakete für das Netzwerk zusammenstellt (oder eine andere Einheit) ein Datenpaket wie in **Figur 6** dargestellt erzeugen. Wenn auch nur eine einzelne Signatur nicht mit den Daten ₖDOₙ, welche dem von irgend einer der Recheneinheiten erzeugten Ausgangsvektor entnommen sein kann, konsistent ist, kann eine empfangende Ausgabeeinheit erkennen, dass eine der Einheiten entweder die Ausgangsdaten oder die Prüfdaten (Signatur) falsch berechnet hat. In den hier beschriebenen Ausführungsformen sind die Ausgabeeinheiten immer auch Eingabeeinheiten, d.h. I/O-Einheiten.

Wenn das System gemäss der zweiten Implementation ausgeführt ist, werden bspw. entweder die Nachrichten wie in Figur 5 gezeigt versandt, oder es findet auf geeignete Art eine Auswahl statt, damit sichergestellt ist, dass mindestens die verwertbaren (von einer genügenden Anzahl von Recheneinheiten identisch berechneten) Daten an die Ausgabeeinheiten übermittelt werden.

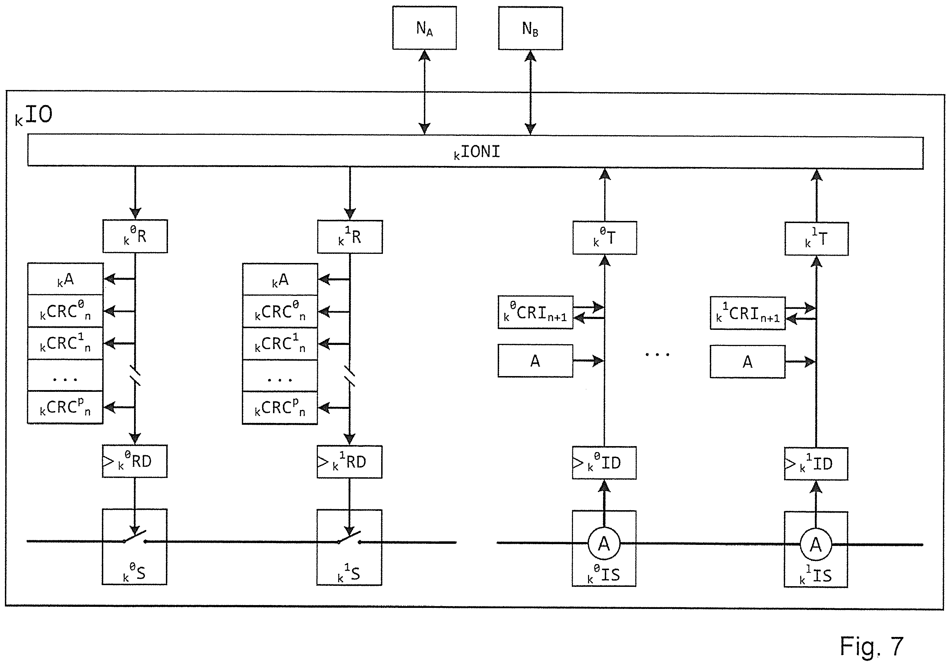

Der Aufbau von Ein- und Ausgabeeinheiten gemäss einem Ausführungsbeispiel ist in **Figur 7** am Beispiel einer zweikanaligen Architektur gezeigt. Das Beispiel von Figur 7 geht von der Annahme aus, dass die Datenpakete wie in Fig. 6 illustriert zusammengesetzt sind.

Empfangen die Kanäle 0 bzw. 1 über das Netzwerkinterface ₖIONI und die Empfänger ₖ⁰R bzw. ₖ¹R eine Nachricht, so prüfen sie die darin enthaltenen Prüfdaten und Signaturen. Enthält eine Nachricht nicht die mindestens erforderliche Anzahl gültiger Signaturen, so verwirft die Ein- und Ausgabeeinheit die Nachricht. Ansonsten gelangen die Ausgangsdaten ₖDOₙ in die Ausgangsregister ₖ⁰RD bzw. ₖ¹RD und damit zur Ausgabe - in der illustrierten Ausführungsform an einen Schalter ₖ⁰S bzw. ₖ¹S. Somit ist gewährleistet, dass Datenfehler in Ausgangspaketen nicht zu einer falschen Ausgabe führen, solange die Anzahl der betroffenen Recheneinheiten kleiner ist als die mindestens erforderliche Anzahl gültiger Signaturen. Die Ein- und Ausgabeeinheiten können also anhand der Signaturen feststellen, ob hinreichend viele Recheneinheiten das Ausgangspaket übereinstimmend berechnet haben.

Datenfehler können auch zu einem falschen Eingangspaket _{o..k}IP⁰ₙ..._{0..k}IP^{p}ₙ führen. Um solche Fehler zu erkennen, wird auf dieselbe Methode zurückgegriffen wie bei den Ausgangspaketen. Dabei werden die Eingangsgrössen wie üblich über mehrere unabhängige Sensoren eingelesen. Fig. 7 zeigt dies am Beispiel von zwei Stromsensoren ₖ⁰IS bzw. ₖ¹IS. Die Messwerte werden in beiden Kanälen in ein Eingangsregister ₖ⁰ID bzw. ₖ¹ID eingelesen. Anschliessend berechnen beide Kanäle die üblichen Prüfdaten A und zusätzlich eine individuelle Signatur k⁰CRCₙ₊₁ bzw. ₖ¹CRCₙ₊₁. Für diese Signaturen gelten dieselben Annahmen wie für diejenige der Ausgangspakete, das heisst, die Signaturen sind so, dass sie nur von der betreffenden Ein-/Ausgabeeinheit erzeugt werden können. Aus diesen Daten erzeugen die Kanäle ein Eingangspaket und geben diese an das Netzwerkinterface ₖIONI aus.

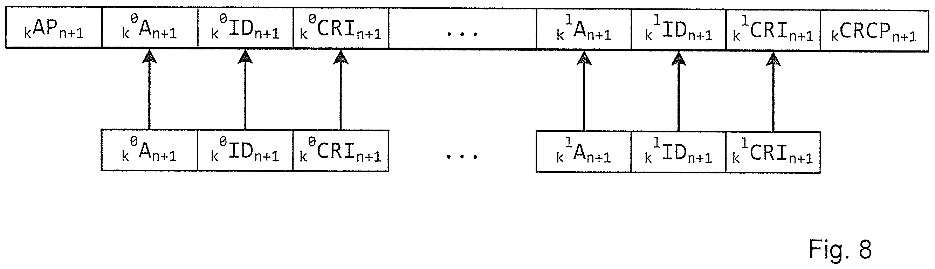

Dieses erzeugt aus den Eingangspaketen der Kanäle analog zu den Ausgangspaketen eine Nachricht als Gesamt-Datenpaket (**Figur 8**) und überträgt diese an die Recheneinheiten PU⁰...PU^{p} der Zentraleinheit. Enthält eine Nachricht nicht die mindestens erforderliche Anzahl Messwerte mit gültiger Signatur, so verwirft die Recheneinheit die Nachricht. In einem zweiten Prüfschritt vergleichen die Recheneinheiten wie gewohnt die Messwerte um festzustellen, ob die Kanäle (im Fall von mehrkanaligen Ein-/Ausgabeeinheiten wie vorliegend) den Messwert übereinstimmend gemessen haben. Somit ist gewährleistet, dass Datenfehler in einem Eingangspaket nicht zu einem falschen Eingangsvektor führen, solange die Anzahl der betroffenen Kanäle kleiner ist als die mindestens erforderliche Anzahl gültiger Signaturen. Die Ein- und Ausgabeeinheiten können also anhand der Signaturen feststellen, ob hinreichend viele Kanäle den Messwert übereinstimmend gemessen haben.

Fehler im Programmcode:
Jede Recheneinheit PU⁰...PU^{p} besitzt nach Fig. 3 einen Programmspeicher P^{0...P}. Um Fehler im darin gespeicherten Programmcode zu entdecken gibt es zwei Möglichkeiten:
Möglichkeit 1: Jede Recheneinheit überträgt den gesamten Inhalt des Programmspeichers an alle anderen Recheneinheiten. Diese Vergleichen die empfangenen Daten mit dem Inhalt ihres Programmreferenzspeichers PR⁰..PR^{p} und leiten im Falle einer Abweichung eine oder mehrere der genannten Aktionen ein.
Möglichkeit 2: Jede Recheneinheit verfügt über einen Selbsttest, mit dem sie den Inhalt des Programmspeichers auf Konsistenz prüfen kann. Stellt eine Recheneinheit einen Fehler in ihrem eigenen Programmspeicher fest, so signalisiert sie dies den anderen Recheneinheiten. Diese leiten dann eine oder mehrere der genannten Aktionen ein.

Es ist allgemein bekannt, dass die Verfügbarkeit eines Rechensystems durch einen redundanten Rechner verbessert werden kann. Es solches Redundanzkonzept, angepasst an die vorliegende Erfindung, ist in **Figur 9** dargestellt. Redundanz als Sicherheitsmerkmal ist auch bei der Ausführungsform nach Figur 3 vorhanden, indem das System mehrere Recheneinheiten aufweist, die optional auch physisch voneinander getrennt sein können; es kann vorgesehen sein, dass die Recheneinheiten einzeln austauschbar sind, wozu sie optional auf verschiedenen Platinen implementiert sein können. Die Ausführungsform von Figur 9 zielt auf das Konzept der höchsten Sicherheitsstufe ab, bei welchem gemäss der ersten Implementation bei einem Fehler (nicht konsistente Ausgangs-, Eingangs- oder Zustandsdaten oder festgestelltem Programmfehler) das Rechnersystem sofort als nicht sicher gilt und eine entsprechende Reaktion ausgelöst wird. Das hat dann bei der Implementation gemäss Fig. 3 zur Folge, dass der Betrieb unterbrochen wird und das ganze System durch Auslösen der Sicherheitsreaktion gesichert wird. Es gibt Konstellationen, bei denen es unerwünscht, nicht toleriert (bspw. bei Ansteuerung von Bahnsicherheitsanlagen, wo der ganze Bahnbetrieb unterbrochen werden müsste) oder sogar gefährlich (Ansteuerung von Flugzeugen etc.) wäre.

Nebst der vorstehend diskutierten Möglichkeit, bei Fehlern den Betrieb zu gewährleisten, indem nur verlangt wird, dass ein Minimum von Daten (nach festgelegten Massstäben) konsistent ist, gibt es auch die Möglichkeit gemäss Figur 9, zwei ganze operative erfindungsgemässe computerisierte Systeme zur Verfügung zu stellen. Beide Systeme CU und CU^{∗} sind erfindungsgemäss eingerichtet und funktionieren bspw. je nach dem vorstehend anhand Figuren 3-8 beschriebenen Prinzip. Die beiden Systeme können je so eingerichtet sein, dass sie unabhängig voneinander gewartet werden können, bspw. indem die Recheneinheiten und Datenspeicher etc. auf je einer eigenen Platine oder mehreren eigenen Platinen implementiert sind.

Das gesamte redundante System weist demnach die zentralen Systeme CU und CU^{∗} auf (eine Verallgemeinerung auf mehr als zwei Rechnersysteme ist ohne weiteres möglich). Beide Systeme sind identisch aufgebaut und verfügen über mehrere je einen Kanal bildenden Recheneinheiten PU⁰...PU^{p} bzw. PU^{0∗}...PU^{p∗}. Weiter verfügt das redundante System hier über mehrere I/O-Einheiten ₒ^{x}IO...ₖ^{x}IO oder ist mindestens eingerichtet, mit solchen I/O-Einheiten zu wechselwirken. Die IO-Einheiten sind bspw. zweikanalig realisiert, sie sind aber nicht notwendigerweise redundant aufgebaut. Für besonders wichtige I/O-Aufgaben (z.B. Kommunikation zu einer übergeordneten Leitstelle) sind auch redundante I/O-Einheiten möglich. Damit ein Einzelfehler nicht das gesamte redundante System lahmlegen kann, verfügt das redundante System zusätzlich über 2 redundante Netzwerke N_{A} und N_{B}, die über 2 redundante Netzwerkinterfaces NI_{A} und NI_{B} bzw. NI_{A}^{∗} und NI_{B}^{∗} mit den zentralen Systemen verbunden sind.

Im Normalbetrieb ist eines der beiden computerisierten Systemen CU bzw. CU^{∗} der "Chef" (Master) und das andere System folgt ("Slave"). Beide Systeme arbeiten 100% identisch mit der einzigen Ausnahme, dass der "Master" dasjenige System ist, das länger als der "Slave" in ununterbrochenem Betrieb ist. Der einzige Unterschied in der Verarbeitung ist, dass der "Master" den zeitlichen Ablauf vorgibt.

Bei der Inbetriebnahme des gesamten redundanten Systems startet das Personal zuerst manuell eines des Zentralsysteme CU oder CU^{∗}. Das zuerst gestartete System wird automatisch zum "Master". Sobald der "Slave" gestartet wird und das Programm geladen hat, übernimmt er in jedem Zyklus die gesamten Eingangs- und Zustandsdaten über das Kommunikationssystem OB bzw. OB^{∗}. Beide Systeme laufen jetzt unabhängig, sie erzeugen aber identische Zustände und daraus identische Meldungen an die IO-Einheiten. Tritt jetzt beispielsweise ein Fehler im Programmcode eine der Recheneinheiten des "Masters" auf, so zieht sich dieser zurück und der "Slave" wird zum "Master". Analog wird verfahren, wenn ein Datenfehler festgestellt wird.

Das Zentralsystem, das sich zurückgezogen hat, wird anschliessend neu konfiguriert, bspw. durch Laden des Programm- bzw. Konfigurationscodes aus dem Referenzspeicher bei jeder Einheit, von einer dem Zentralsystem zugeordneten oder externen Quelle oder vom anderen Zentralsystem.

Sobald dieses Zentralsystem wieder betriebsbereit ist, übernimmt es in einem Zyklus die Eingangs- und Zustandsdaten des neuen/aktuellen "Masters" über das Kommunikationssystem OB bzw. OB^{∗}. Jetzt ist das neu wieder aktivierte Zentralsystem als "Slave" wieder betriebsbereit und meldet dies dem "Master" und wirkt bei den nachfolgenden Zyklen wieder mit.

Wenn eine der Recheneinheiten des "Slave" einen Fehler macht, wird analog verfahren, d.h. der "Slave" zieht sich zurück und wird, nachdem er wieder betriebsbereit ist, erneut als "Slave" mitwirken.

Sofern bei einem Programmtest oder durch wiederholt hintereinander beobachtete Daten- oder Programmfehler ein Hinweis auf Hardwarefehler gefunden wird, kann die entsprechende Recheneinheit ganz ausgeschaltet werden. Das kann durch einen Hinweis an den Benutzer ergänzt werden, wonach die betreffende Recheneinheit oder ggf. die ganze die Recheneinheit enthaltende Platine auszuwechseln ist. Wenn das redundante System genügend redundant ausgestattet ist, kann ein solches Auswechseln unter Umständen auch unnötig sein, und es reicht, wenn die Einheit dauerhaft ausgeschaltet bleibt.

## Patentansprüche

1. Computerisiertes System, welches eingerichtet ist, in getakteten Rechenzyklen, die in einem vorgegebenen Rhythmus durchgeführt werden, aus einem Eingangsvektor (Iₙ), der eine diskrete Anzahl von Eingangsgrössen repräsentiert, und einem Zustandsvektor (Zₙ₋₁), der eine diskrete Anzahl von Zustandsgrössen repräsentiert und einen gesamten Systemzustand repräsentiert, einen neuen Zustandsvektor (Zₙ), dessen Zustandsgrössen aufdatiert sind, sowie einen Ausgangsvektor (Oₙ), der eine diskrete Anzahl von Ausgangsgrössen repräsentiert, zu bestimmen, wobei die Ausgangsgrössen zur Ansteuerung mindestens eines Geräts und/oder zur Ausgabe von Informationen vorgesehen sind, aufweisend eine Mehrzahl von Recheneinheiten, welche parallel je eigenständig aus dem Eingangsvektor und dem Zustandsvektor den neuen Zustandsvektor und den Ausgangsvektor bestimmen, **dadurch gekennzeichnet, dass** das computerisierte System eingerichtet ist, nach jedem Rechenzyklus mindestens alle neuen Zustandsvektoren zwischen den Recheneinheiten auszutauschen und das computerisierte System weiter eingerichtet ist, die aufdatierten Zustandsvektoren miteinander vergleichen zu können..

2. Computerisiertes System nach Anspruch 1, wobei nebst den Zustandsvektoren auch die Ausgangsvektoren und/oder Eingangsvektoren ausgetauscht werden.

3. Computerisiertes System nach Anspruch 1 oder 2, wobei jede Recheneinheit über einen eigenen Bus (OB^{o}...OB^{p}) verfügt, über den der Zustandsvektor sowie gegebenenfalls der Ausgangsvektor und/oder Eingangsvektor an die restlichen Recheneinheiten übertragbar ist/sind.

4. Computerisiertes System nach einem der vorangehenden Ansprüche, wobei die empfangenen Zustandsvektoren und ggf. Ausgangsvektoren und/oder Eingangsvektoren durch jede der Recheneinheiten mit den eigenen Vektoren verglichen werden, wobei das System beispielsweise eingerichtet ist, bei einer Abweichung eines Vektors eine Sicherheitsreaktion auszulösen, die beinhalten kann, dass das Resultat keiner der Recheneinheiten des computerisierten Systems für die Ansteuerung und/oder zur Ausgabe berücksichtigt wird.

5. Computerisiertes System nach einem der vorangehenden Ansprüche, wobei die Recheneinheiten eingerichtet sind, sich gegenseitig einen Programmcode bzw. Konfigurationscode P zu übermitteln und zu überprüfen.

6. Computerisiertes System nach einem der vorangehenden Ansprüche, wobei jede Recheneinheit eingerichtet ist, durch einen Prüfsummenrechner aus dem Ausgangsvektor und/oder einer Teilmenge des Ausgangsvektors, welcher die an eine Ausgabeeinheit zu übermittelnden Ausgangsgrössen beinhaltet, eine Prüfsumme zu bilden, wobei sich die Prüfsummenrechner der Recheneinheiten unterscheiden, wobei die einzelnen Prüfsummenrechner beispielsweise ein unterschiedliches Polynom zur Berechnung der Prüfsumme verwenden und/oder mit unterschiedlichen Initialvektoren rechnen.

7. Computerisiertes System nach einem der vorangehenden Ansprüche, wobei jede Recheneinheit (PU^{o} ... PU^{p}) unabhängig für jede Ausgabeeinheit (ₒIO ... ₖIO) einer vorgesehenen Anzahl von Ausgabeeinheiten ein Kommunikationspaket mit Adresse, Paketnummer, Daten und Prüfsumme berechnet., und wobei das computerisierte System eingerichtet ist, beispielsweise über ein Netzwerkinterface (NI) die Kommunikationspakete der Recheneinheiten (PU° ... PU^{p}) zu einem Gesamtpaket ₖSPₙ₊₁ zusammenzufügen und optional mit globaler Adresse und Prüfsumme zu ergänzen, wobei beispielsweise das Gesamtpaket die Daten nur einmal enthält.

8. Computerisiertes System nach einem der vorangehenden Ansprüche, aufweisend eine Mehrzahl von Ausgabeeinheiten ₒIO ... ₖIO, welche eingerichtet sind, je mindestens eine Teilmenge der Ausgangsgrössen zu empfangen und abhängig davon über ein Interface einen Befehl oder eine Information auszugeben.

9. Computerisiertes System nach Anspruch 8, wobei jede Recheneinheit eingerichtet ist, durch einen Prüfsummenrechner aus dem Ausgangsvektor und/oder einer Teilmenge des Ausgangsvektors, welcher die an eine Ausgabeeinheit zu übermittelnden Ausgangsgrössen beinhaltet, eine Prüfsumme zu bilden, wobei sich die Prüfsummenrechner der Recheneinheiten unterscheiden und wobei die Ausgabeeinheiten befähigt sind, zu prüfen, ob ein empfangenes Datenpaket über korrekte Prüfsummen von allen Recheneinheiten (PU° ... PU^{p}) verfügt, und beispielsweise eingerichtet sind, eine Ausgabe an die Interfaces nur durchzuführen, wenn alle Prüfsummen von allen Recheneinheiten korrekt sind, oder eine Ausgabe an die Interfaces nur durchzuführen, wenn eine Mindest-Anzahl der Prüfsummen von allen Recheneinheiten korrekt sind.

10. Computerisiertes System nach einem der vorangehenden Ansprüche, wobei die Recheneinheiten (PU) einem Zentralsystem (CU, CU^{∗}) zugeordnet sind, aufweisend ein Netzwerk (N) zur Verbindung des Zentralsystems mit Ein- und/oder Ausgabeeinheiten, und optional ein zweites redundantes Netzwerk (N^{∗}) zur Erhöhung der Verfügbarkeit.

11. Redundantes System, aufweisend zwei Zentralsysteme, welche je als computerisiertes System nach einem der Ansprüche 1-10 ausgebildet sind.

12. Redundantes System nach Anspruch 11, wobei die Zentralsysteme eingerichtet sind, nach jedem Zyklus mindestens alle neuen Zustandsvektoren miteinander auszutauschen.

13. Redundantes System nach Anspruch 12, wobei jedes zentrale System eingerichtet ist, in einen Servicemodus zu gehen, wenn ein Vergleich der von den Recheneinheiten des zentralen Systems erzeugten Zustandsvektoren und/oder gegebenenfalls Ausgangs- und/oder Eingangsvektoren eine Abweichung ergibt, wobei im Servicemodus beispielsweise das Programm mindestens derjenigen Recheneinheit neu geladen wird, welche von den anderen Recheneinheiten abweichende Daten erzeugt hat.

14. Redundantes System nach Anspruch 13, wobei dasjenige zentrale System als Slave den Betrieb wieder aufnimmt, welches aus dem Servicemodus in einen Betriebsmodus zurückkehrt.

## Claims

1. A computerised system being configured to determine, in clocked computing cycles which are carried out in a predetermined rhythm, from an input vector (Iₙ), which represents a discrete number of input variables and from a state vector (Zₙ₋₁) which represents a discrete number of state variables and represents an entire system state, a new state vector (Zₙ) whose state variables are updated, as well as an output vector (Oₙ) which represents a discrete number of output variables, wherein the output variables are provided for controlling at least one appliance and/or for outputting information, comprising a plurality of computation units which in parallel each autonomously determine the new state vector and the output vector from the input vector and the state vector, **characterised in that** the computerised system is configured such that at least all news state vectors are exchanged between the computation units after each cycle and the computerized system is further configured to be able to compare the updated state vectors with one another..

2. The computerised system according to claim 1, wherein in addition to the state vectors, the output vectors and/or input vectors are also exchanged.

3. The computerised system according to claim 1 or 2, wherein each computation unit has its own bus (OB⁰...OB^{p}), via which the state vector as well as possibly the output vector and/or input vector can be transmitted to the remaining computation units.

4. The computerised system according to one of the preceding claims, wherein the received state vectors and possibly output vectors and/or input vectors, by way of each of the computation units, are compared with their own vectors, wherein the system is for example configured to activate a safety reaction given a difference of a vector, wherein the safety reaction can include the result of none of the computation units of the computerised system being taken into account for the control and/or for the output.

5. The computerised system according to one of the preceding claims, wherein computation units are configured to mutually transfer and examine a program code or configuration code P.

6. The computerised system according to one of the preceding claims, wherein each computation unit is configured, by way of a checksum computer, to form a checksum from the output vector and/or a part-quantity of the output vector, said output vector comprising the output variables to be transferred to an output unit, wherein the checksum computers of the computation units differ, wherein the individual checksum computers for example use a different polynomial for computing the checksum and/or compute with different initial vectors.

7. The computerised system according to one of the preceding claims, wherein each computation unit (PU⁰ ... PU^{p}) independently computes a communication packet with an address, packet number, data and checksum, for each output unit (₀IO ... ₖIO) of an envisaged number of output units, and wherein the computerised system is configured, for example via a network interface (NI), to join together the communication packets of the computation units (PU° ... PU^{p}) into a total packet ₖSPₙ₊₁ and to optionally supplement it with a global address and checksum, wherein the total packet for example contains redundant information only once.

8. The computerised system according to one of the preceding claims, comprising a plurality of output units ₀IO...ₖIO which are configured to each receive at least a part-quantity of the output variable and, depending on this, to output a command or information via an interface.

9. The computerised system according to claim 8, wherein each computation unit is configured to form, by way of a checksum computer, a checksum from the output vector and/or a part-quantity of the output vector, said output vector comprising the output variables which are to be transferred to the output unit, wherein the checksum computers of the computation units differ and wherein the output units are capable of checking whether a received data packet has correct checksums of all computation units (PU⁰...PU^{p}), wherein the output units are for example configured to only carry out an output to the interfaces when all checksums of all computation units are correct or to only carry out an output to the interfaces when a minimum number of checksums of all computation units are correct.

10. The computerised system according to one of the preceding claims, wherein the computation units (PU) are assigned to a central system (CU, CU^{∗}), comprising a network (N) for connection of the central system to input and/or output units, and optionally a second redundant network (N^{∗}) for increasing the availability.

11. A redundant system, comprising two central systems which are each designed as a computerised system according to one of the claims 1-10.

12. The redundant system according to claim 11, wherein the central systems are configured to exchange at least all new state vectors with one another after each cycle.

13. The redundant system according to claim 12, wherein each central system is configured to go into a service mode if a comparison of the state vectors produced by the computation units of the central system and/or possibly of output and/or input vectors results in a difference, wherein for example in the service mode, the program of at least that computation unit which has produced data differing from the other computation units is newly loaded.

14. The redundant system according to claim 13, wherein that central system which returns from the service mode into an operating mode reassumes operation as a slave.

## Revendications

1. Système informatisé, qui est conçu pour déterminer, dans des cycles de calcul cadencés, qui sont exécutés à un rythme prédéfini, à partir d'un vecteur d'entrée (In), qui représente un nombre discret de grandeurs d'entrée, et d'un vecteur d'état (Zn-1), qui représente un nombre discret de grandeurs d'état et qui représente un état global du système, un nouveau vecteur d'état (Zn), dont les grandeurs d'état sont mises à jour, ainsi qu'un vecteur de sortie (On), qui représente un nombre discret de grandeurs de sortie, les grandeurs de sortie étant prévues pour la commande d'au moins un appareil et/ou pour la sortie d'informations, présentant une pluralité d'unités de calcul qui déterminent chacune en parallèle et de manière autonome le nouveau vecteur d'état et le vecteur de sortie à partir du vecteur d'entrée et du vecteur d'état, **caractérisé en ce que** le système informatisé est conçu pour échanger après chaque cycle de calcul au moins tous les nouveaux vecteurs d'état entre les unités de calcul et le système informatisé est en outre conçu pour pouvoir comparer entre eux les vecteurs d'état mis à jour.

2. Système informatisé selon la revendication 1, dans lequel, outre les vecteurs d'état, les vecteurs de sortie et/ou les vecteurs d'entrée sont également échangés.

3. Système informatisé selon la revendication 1 ou 2, dans lequel chaque unité de calcul dispose de son propre bus (OB⁰...OB^{p}), par lequel le vecteur d'état ainsi que, le cas échéant, le vecteur de sortie et/ou le vecteur d'entrée peuvent être transmis aux autres unités de calcul.

4. Système informatisé selon l'une des revendications précédentes, dans lequel les vecteurs d'état reçus et, le cas échéant, les vecteurs de sortie et/ou les vecteurs d'entrée sont comparés par chacune des unités de calcul à ses propres vecteurs, le système étant par exemple agencé pour déclencher, en cas d'écart d'un vecteur, une réaction de sécurité pouvant impliquer que le résultat n'est pris en compte par aucune des unités de calcul du système informatisé pour la commande et/ou la sortie.

5. Système informatisé selon l'une des revendications précédentes, dans lequel les unités de calcul sont agencées pour se transmettre mutuellement un code de programme ou un code de configuration P et pour le vérifier.

6. Système informatisé selon l'une des revendications précédentes, dans lequel chaque unité de calcul est agencée pour former une somme de contrôle par un calculateur de somme de contrôle à partir du vecteur de sortie et/ou d'un sous-ensemble du vecteur de sortie qui contient les grandeurs de sortie à transmettre à une unité de sortie, les calculateurs de somme de contrôle des unités de calcul étant différents, les différents calculateurs de somme de contrôle utilisant par exemple un polynôme différent pour calculer la somme de contrôle et/ou calculant avec des vecteurs initiaux différents.

7. Système informatisé selon l'une des revendications précédentes, dans lequel chaque unité de calcul (PU⁰ ... PUP) calcule indépendamment pour chaque unité de sortie (₀IO ... ₖIO) d'un nombre prévu d'unités de sortie un paquet de communication avec une adresse, un numéro de paquet, des données et une somme de contrôle .., et le système informatisé étant agencé pour réunir, par exemple par l'intermédiaire d'une interface de réseau (NI), les paquets de communication des unités de calcul (PU⁰ ... PU^{p}) en un paquet global ₖSPₙ₊₁ et pour les compléter éventuellement par une adresse globale et une somme de contrôle, le paquet global ne contenant par exemple les données qu'une seule fois.

8. Système informatisé selon l'une des revendications précédentes, présentant une pluralité d'unités de sortie ₀IO ... ₖIO, qui sont configurées pour recevoir chacune au moins un sous-ensemble des grandeurs de sortie et, en fonction de celles-ci, pour émettre une instruction ou une information via une interface.

9. Système informatisé selon la revendication 8, dans lequel chaque unité de calcul est agencée pour former, par un calculateur de somme de contrôle, une somme de contrôle à partir du vecteur de sortie et/ou d'un sous-ensemble du vecteur de sortie qui contient les grandeurs de sortie à transmettre à une unité de sortie, les calculateurs de somme de contrôle des unités de calcul étant différents et les unités de sortie étant aptes à vérifier si un paquet de données reçu dispose de sommes de contrôle correctes de toutes les unités de calcul (PU⁰... PU^{p}), et sont par exemple agencés pour n'effectuer une sortie vers les interfaces que si toutes les sommes de contrôle de toutes les unités de calcul sont correctes, ou pour n'effectuer une sortie vers les interfaces que si un nombre minimal de sommes de contrôle de toutes les unités de calcul sont correctes.

10. Système informatisé selon l'une des revendications précédentes, dans lequel les unités de calcul (PU) sont associées à un système central (CU, CU^{∗}), comprenant un réseau (N) pour connecter le système central aux unités d'entrée et/ou de sortie, et éventuellement un deuxième réseau redondant (N^{∗}) pour augmenter la disponibilité.

11. Système redondant comprenant deux systèmes centraux, chacun étant conçu comme un système informatisé selon l'une des revendications 1 à 10.

12. Système redondant selon la revendication 11, dans lequel les systèmes centraux sont agencés pour échanger entre eux au moins tous les nouveaux vecteurs d'état après chaque cycle.

13. Système redondant selon la revendication 12, chaque système central étant agencé pour passer en mode service lorsqu'une comparaison des vecteurs d'état générés par les unités de calcul du système central et/ou, le cas échéant, des vecteurs de sortie et/ou d'entrée révèle une divergence, le mode service permettant par exemple de recharger le programme d'au moins l'unité de calcul qui a généré des données différentes de celles des autres unités de calcul.

14. Système redondant selon la revendication 13, dans lequel le système central reprend le fonctionnement en tant qu'esclave lorsqu'il revient du mode de service à un mode de fonctionnement.
